# EUROPEAN PATENT APPLICATION

(11) **EP 4 539 157 A1**
(43) Date of publication of application: **16.04.2025**
(21) Application number: 23914337.3
(22) Date of filing: 11.10.2023
(51) Int. Cl.: H01M 4/36, H01M 4/62

(54) **POSITIVE ELECTRODE ACTIVE MATERIAL FOR SODIUM-ION BATTERY, SODIUM-ION BATTERY, AND ELECTRIC DEVICE**

(30) Priority: 03.01.2023 CN 202310002450
(71) Applicant: Contemporary Amperex Technology (Hong Kong) Limited, Hong Kong (HK)
(72) Inventor: JIN, Haizu, Ningde, Fujian 352100 (CN); LI, Xiao, Ningde, Fujian 352100 (CN); YE, Yonghuang, Ningde, Fujian 352100 (CN)
(74) Representative: von Tietzen und Hennig, Nikolaus
(86) International application number: PCT/CN2023/123952
(87) International publication number: WO 2024/146199

(57) **Abstract**

The present application provides a positive electrode active material for a sodium-ion battery which includes a core and a shell layer covering the surface of the core, a sodium-ion battery and an electrical device. The core contains sodium-containing positive electrode active material particles, the shell layer has a pore structure, and the shell layer contains a sodiophilic material.

## Description

### CROSS-REFERENCE TO RELATED APPLICATION

The present application claims priority to Chinese Patent Application No. 202310002450.3, entitled "Positive Electrode Active Material for Sodium-ion Battery, Sodium-ion Battery and Electrical Device" and filed on January 03, 2023, which is hereby incorporated by reference in its entirety.

### TECHNICAL FIELD

The present application relates to the field of battery technology, and in particular to a positive electrode active material for a sodium-ion battery, a sodium-ion battery and an electrical device.

### BACKGROUND

Batteries have gradually become an indispensable part of people's lives due to their wide application in fields such as mobile phones, tablet computers, electric vehicles, etc. As batteries are widely applied in various fields, requirements for their performance become more demanding as well. However, in the related technologies, requirements for the cycle performance and the safety performance of batteries remain insatiable, and therefore it is highly desirable to improve both the cycle performance and the safety performance of batteries.

### SUMMARY

The present application provides a positive electrode active material for a sodium-ion battery that is capable of enhancing both cycle performance and safety performance of the sodium-ion battery, a sodium-ion battery and an electrical device.

A first aspect of the present application provides a positive electrode active material for a sodium-ion battery, which comprises a core and a shell layer covering a surface of the core. The core comprises a sodium-containing positive electrode active material particle. The shell layer has a pore structure, and the shell layer contains a sodiophilic material.

In the positive electrode active material for a sodium-ion battery according to the present application, the shell layer containing the sodiophilic material can better wrap the core that contains one or more sodium-containing positive electrode active material particles. When the positive electrode active material is used in a sodium-ion battery, the shell layer covering the surface of the core can reduce the expansion of the core and thus reduce the deformation of the positive electrode active material, which is conducive to the deintercalation of sodium ions, thereby achieving the purpose of enhancing the cycle performance and the safety performance of the sodium-ion battery.

According to any one of the preceding embodiments of the first aspect of the present application, the average particle size D1 of the sodium-containing positive electrode active material particles and the average pore diameter D2 of the pore structure satisfy: 5 ≤ D1/D2 ≤ 600. The average particle size D1 of the sodium-containing positive electrode active material particles and the average pore diameter D2 of the pore structure, when satisfying the aforementioned relationship, enable more suitable deintercalation of sodium ions, which leads to enhanced cycle performance and safety performance of the sodium-ion battery.

According to any one of the preceding embodiments of the first aspect of the present application, the average particle size D1 of the sodium-containing positive electrode active material particles is in a range of 10 µm to 50 µm. When used in a sodium ion battery, the average particle size D1 of the sodium-containing positive electrode active material particles, when set within the aforementioned range, enhances the cycle performance and the safety performance of the sodium-ion battery while further increasing the compacted density of the positive electrode active material layer, which leads to increased energy density of the sodium-ion battery.

According to any one of the preceding embodiments of the first aspect of the present application, the average pore diameter D2 of the pore structure is in a range of 0.1 µm to 1 µm. The average pore diameter D2 of the pore structure, when set within the aforementioned range, can be compatible with the average particle size of the positive electrode active particles, which is conducive to the deintercalation of sodium ions from the positive electrode active material particles, thereby enhancing the rate performance of the sodium-ion battery.

According to any one of the preceding embodiments of the first aspect of the present application, the sodiophilic material includes one or more of sodiophilic carbon-based materials and sodiophilic metal-based particles.

According to any one of the preceding embodiments of the first aspect of the present application, the sodiophilic carbon-based materials include one or more of graphene oxide, modified graphene oxide, modified carbon nanotubes, and modified carbon fiber.

According to any one of the preceding embodiments of the first aspect of the present application, the sodiophilic metal-based particles include one or more of sodiophilic metal particles and sodiophilic metal oxide particles.

According to any one of the preceding embodiments of the first aspect of the present application, the sodiophilic metal particles include one or more of copper, tin, gold, silver, aluminum, indium, zinc, lead, antimony, or alloys thereof.

According to any one of the preceding embodiments of the first aspect of the present application, the sodiophilic metal oxide particles include one or more of copper oxide, tin oxide, β-alumina, manganese dioxide, cobalt oxide, zinc oxide, and nickel oxide.

According to any one of the preceding embodiments of the first aspect of the present application, the thickness of the shell layer is in a range of 0.1 µm to 1 µm.

A second aspect of the present application provides a sodium-ion battery comprising the positive electrode active material for a sodium-ion battery according to the first aspect of the present application.

A third aspect of the present application provides an electrical device comprising the sodium-ion battery according to the second aspect of the present application.

The aforementioned description is merely an overview of technical solutions of the present application, which will be more clearly understood by implementing based on the contents of the description. The aforementioned and other objectives, features, and advantages of the present application will be more apparent and easier to understand from the specific embodiments of the present application listed below.

### DESCRIPTION OF THE DRAWINGS

Various additional advantages and benefits will become apparent to those skilled in the art upon reading the following detailed description of the alternative embodiments. The accompanying drawings are merely intended to illustrate the alternative embodiments rather than being interpreted as limitations to the present application. Moreover, in all the drawings, the same components are denoted with the same reference numerals. In the drawings:
Fig. 1 illustrates a schematic structural diagram of a sodium-ion battery according to some embodiments of the present application.
Fig. 2 illustrates an exploded view of the sodium-ion battery in Fig. 1.
Fig. 3 illustrates a schematic structural diagram of a battery module according to some embodiments of the present application.
Fig. 4 illustrates a schematic structural diagram of a battery pack according to some embodiments of the present application.
Fig. 5 illustrates an exploded view of the battery pack in Fig. 4.
Fig. 6 illustrates a schematic structural diagram of an electrical device according to some embodiments of the present application.

The drawings are not drawn to scale. Reference numerals are as follows: 1 battery pack, 2 upper case body, 3 lower case body, 4 battery module, 5 sodium-ion battery, 51 housing, 52 electrode assembly, 53 cover plate.

### DETAILED DESCRIPTION

The examples of technical solutions in the present application will be described in detail below in conjunction with the accompanying drawings. The following examples are merely illustrative to clarify the technical solutions of the present application, rather than limitations to the scope of protection of the present application.

Unless otherwise defined, all technical and scientific terms used herein have the same meaning as commonly understood by those skilled in the art. The terms used herein are merely intended to describe specific examples, rather than to limit the present application. The terms "comprise" and "include" and any of their variations, as used in the description, the claims and the aforementioned description of drawings of the present application, are intended to encompass non-exclusive inclusions.

In describing the examples of the present application, technical terms such as "first," "second," etc., are merely used to distinguish different objects, which should in no way be interpreted as indicating or suggesting relative importance or implying the quantity or specific order of the indicated technical features, or their hierarchical relationships. In describing the examples of the present application, "plurality" refers to two or more, unless otherwise explicitly and specifically limited.

Mention of "example" herein refers to that certain features, structures, or characteristics described in association with the example may be included in at least one example of the present application. Such a phrase appearing in various parts in the description does not necessarily all refer to the same example, nor is it an independent or alternative example that is mutually exclusive with other examples. It is explicitly or implicitly understood by those skilled in the art that the examples described herein can be combined with other examples.

In describing the examples of the present application, the term "and/or" simply describes relationships between associated objects, indicating the presence of three possible relationships, for example, A and/or B may indicate that A alone, both A and B, or B alone may exist. In addition, the character "/" used herein generally indicates an "or" relationship between associated objects.

In describing the examples of the present application, the term "plurality" refers to two or more (including two), similarly, "a plurality of sets" refers to two or more sets (including two sets), and "a plurality of pieces" refers to two or more pieces (including two pieces).

In describing the examples of the present application, technical terms such as "center," "longitudinal," "lateral," "length," "width," "wall thickness," "upper," "lower," "front," "rear," "left," "right," "vertical," "horizontal," "top," "bottom," "inner," "outer," "clockwise," "counterclockwise," "axial," "radial," "circumferential," etc., indicate orientation or positional relationships based on the orientation or positional relationships shown in the drawings. These terms are merely provided for convenience and brevity of describing the examples of the present application, which do not indicate or suggest devices or elements that must have a specific orientation or be constructed or operated in a specific orientation, and thus should in no way be interpreted as limitations to the examples of the present application.

In describing the examples of the present application, unless otherwise explicitly defined or limited, technical terms such as "install," "connect," "join," "fix," etc., should be broadly interpreted, for example, they may be a fixed connection or detachable connection or integrated connection, or a mechanical connection or electrical connection, or a direct connection or indirect connection through intermediate medium, or an internal connection of two elements or an interaction between two elements. Those skilled in the art would understand the specific meanings of these terms in the context of the examples of the present application under specific circumstances.

Batteries, due to their ability of being repeatedly charged and discharged for recycling, are widely applied in fields such as power tools and electric vehicles. However, during the charge/discharge process, the positive electrode active material of the battery may undergo irreversible structural changes, for example, expansion and deformation of the lattice of the positive electrode active material, resulting in the inability of the active ions after deintercalation to be re-intercalated. This may lead to formation of dendrites in the battery and reduction in the quantity of active ions inside the battery, which adversely affect the cycle performance and the safety performance of the battery.

In view of this, the present application provides a positive electrode active material for a sodium-ion battery that is capable of enhancing the cycle performance and the safety performance of the sodium-ion battery, a sodium-ion battery, and an electrical device.

### Positive electrode active material for sodium-ion battery

A first aspect of the present application provides a positive electrode active material for a sodium-ion battery, which includes a core and a shell layer covering the surface of the core. The core comprises one or more sodium-containing positive electrode active material particles. The shell layer has a pore structure and contains a sodiophilic material.

In the positive electrode active material for a sodium-ion battery according to the present application, the shell layer containing the sodiophilic material can better wrap the core comprising one or more sodium-containing positive electrode active material particles. When the positive electrode active material is used in a sodium-ion battery, the shell layer covering the surface of the core can reduce the expansion of the core and thus reduce the deformation of the positive electrode active material is reduced, which is conducive to the deintercalation of sodium ions, thereby achieving the purpose of enhancing the cycle performance and the safety performance of the sodium-ion battery.

In some embodiments of the present application, the average particle size D1 of the sodium-containing positive electrode active material particles and the average pore diameter D2 of the pore structure satisfy: 5 ≤ D1/D2 ≤ 600. The average particle size D1 of the sodium-containing positive electrode active material particles and the average pore diameter D2 of the pore structure, when satisfying the aforementioned relationship, enable more suitable deintercalation of sodium ions, leading to enhanced cycle performance and safety performance of the sodium-ion battery.

In the present application, the average particle size of particles has a well-known meaning in the art, and can be measured using instruments and methods known in the art. For example, the average particle size may be calculated by measuring a material with a scanning electron microscope (SEM), a transmission electron microscope (TEM), or a particle size distribution instrument to generate images of the material, and then randomly selecting, from the generated images, a plurality of (e.g., 100 or more) test particles (for example, the sodium-containing positive electrode active material particles of the present application) to calculate the average value of the shortest diagonal length of these particles.

In the present application, the average pore diameter of the pore structure has a well-known meaning in the art, and can be measured using instruments and methods known in the art. For example, the average pore diameter may be calculated using the BET (Brunauer-Emmett-Teller) method with reference to GB/T21650.2-2008, and may be tested using Tri-Star 3020-type specific surface area and average pore diameter analysis tester (manufactured by Micromeritics Corporation, USA).

In some examples, the ratio of the average particle size D1 of the sodium-containing positive electrode active material particles to the average pore diameter D2 of the pore structure may be, but not limited to 5, 6, 7, 8, 9, 10, 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600, or in a range formed by any two of these values, for example, the ratio of the average particle size D1 of the sodium-containing positive electrode active material particles to the average pore diameter D2 of the pore structure may be in a range of from 6 to 580, from 10 to 520, from 20 to 480, from 50 to 400, from 80 to 360, from 100 to 280, from 120 to 240, or from 150 to 210.

In some embodiments of the present application, the average particle size D1 of the sodium-containing positive electrode active material particles is in a range of 10 µm to 50 µm. When used in a sodium ion battery, the average particle size D1 of the sodium-containing positive electrode active material particles, when set within the aforementioned range, can enhance the cycle performance and safety performance of the sodium-ion battery while further increasing the compacted density of the positive electrode active material layer, leading to increased energy density of the sodium-ion battery.

In some examples, the average particle size D1 of the sodium-containing positive electrode active material particles may be, but not limited to, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, or in a range formed by any two of these values, for example, the average particle size D1 of the sodium-containing positive electrode active material particles may be in a range of from 11 µm to 48 µm, from 15 µm to 42 µm, from 20 µm to 38 µm, or from 24 µm to 32 µm.

In some embodiments of the present application, the average pore diameter D2 of the pore structure is in a range of 0.1 µm to 1 µm. The average pore diameter D2 of the pore structure, when set within the aforementioned range, can be compatible with the average particle size of the positive electrode active particles, which is conducive to the deintercalation of sodium ions from the positive electrode active material particles, leading to enhanced the rate performance of the sodium-ion battery when used in the sodium-ion battery.

In some examples, the average pore diameter D2 of the pore structure may be, but not limited to, 0.1 µm, 0.11 µm, 0.12 µm, 0.13 µm, 0.14 µm, 0.15 µm, 0.16 µm, 0.17 µm, 0.18 µm, 0.19 µm, 0.2 µm, 0.21 µm, 0.22 µm, 0.23 µm, 0.24 µm, 0.25 µm, 0.26 µm, 0.27 µm, 0.28 µm, 0.29 µm, 0.3 µm, 0.31 µm, 0.32 µm, 0.33 µm, 0.34 µm, 0.35 µm, 0.36 µm, 0.37 µm, 0.38 µm, 0.39 µm, 0.4 µm, 0.41 µm, 0.42 µm, 0.43 µm, 0.44 µm, 0.45 µm, 0.46 µm, 0.47 µm, 0.48 µm, 0.49 µm, 0.5 µm, 0.51 µm, 0.52 µm, 0.53 µm, 0.54 µm, 0.55 µm, 0.56 µm, 0.57 µm, 0.58 µm, 0.59 µm, 0.6 µm, 0.61 µm, 0.62 µm, 0.63 µm, 0.64 µm, 0.65 µm, 0.66 µm, 0.67 µm, 0.68 µm, 0.69 µm, 0.7 µm, 0.71 µm, 0.72 µm, 0.73 µm, 0.74 µm, 0.75 µm, 0.76 µm, 0.77 µm, 0.78 µm, 0.79 µm, 0.8 µm, 0.81 µm, 0.82 µm, 0.83 µm, 0.84 µm, 0.85 µm, 0.86 µm, 0.87 µm, 0.88 µm, 0.89 µm, 0.9 µm, 0.91 µm, 0.92 µm, 0.93 µm, 0.94 µm, 0.95 µm, 0.96 µm, 0.97 µm, 0.98 µm, 0.99 µm, 1 µm, or in a range formed by any two of these values; for example, the average pore diameter D2 of the pore structure may be in a range of from 0.11 µm to 0.98 µm, from 0.16 µm to 0.89 µm, from 0.21 µm to 0.81 µm, from 0.29 µm to 0.71 µm, or from 0.35 µm to 0.6 µm.

Furthermore, in the aforementioned embodiments, the shape of pores in the pore structure is not particularly limited, and may be any well-known shape in the art, such as square, circular, V-shape, etc.

Moreover, in some embodiments of the present application, the porosity of the shell layer is in a range of 20% to 60%. The porosity of the shell layer, when set within the aforementioned range, enables a uniform distribution of the pore structure, which is conducive to the deintercalation of sodium ions, leading to enhanced cycle performance and safety performance of the sodium-ion battery.

In the present application, the porosity refers to a ratio of the internal pore volume to total volume of a material, which is a well-known meaning in the art, and can be measured using various instruments and methods known in the art. For example, the porosity can be measured with reference to the Chinese national standard GB/T 24586-2009 entitled Iron ores-Determination of apparent density, true density and porosity with instruments such as AccuPyc II 1340-type fully automatic true density tester (manufactured by Micromeritics Corporation, USA). Porosity= (V1-V2)/V1*100% where V1 is the apparent volume of the material, and V2 is the true volume of the material. V1 can be tested using the mercury intrusion method, and V2 can be tested using the nitrogen gas adsorption method.

In some examples, the porosity of the shell layer may be, but not limited to, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, or in a range formed by any two of these values, for example, the porosity of the shell layer may be in a range of from 21% to 58%, from 25% to 52%, or from 30% to 48%.

In the embodiments of the present application, suitable sodiophilic materials can be conducive to the deintercalation of sodium ions, thereby enhancing the cycle performance and the safety performance of the sodium-ion battery.

In some embodiments of the present application, the sodiophilic materials include one or more of sodiophilic carbon-based materials and sodiophilic metal-based particles. The aforementioned sodiophilic materials can allow the shell to wrap the core even better so as to reduce the expansion of the core while enabling directional deintercalation of sodium ions, which results in enhanced cycle performance, safety performance, and rate capability of the sodium-ion battery.

In some embodiments of the present application, the specific surface area of the sodiophilic carbon-based materials is in a range of 80 m²/g to 2500 m²/g. The specific surface area of the sodiophilic carbon-based materials, when set within the aforementioned range, can increase the sodiophilic interface, which can further enhance the shell coating on the core and facilitate the directional deintercalation of sodium ions.

In the present application, the specific surface area of the material has the well-known meaning in the art, and can be measured using instruments and methods known in the art. For example, the specific surface area can be tested using nitrogen adsorption and specific surface area analysis test methods with reference to GB/T 19587-2017, and calculated using the BET (Brunauer-Emmett-Teller) method. Optionally, the nitrogen adsorption and specific surface area analysis test can be performed using the Tri-Star 3020 specific surface area and average pore diameter analysis tester (manufactured by Micromeritics Corporation, USA).

In some examples, the specific surface area of the sodiophilic carbon-based materials may be, but not limited to, 80 m²/g, 90 m²/g, 100 m²/g, 110 m²/g, 120 m²/g, 130 m²/g, 140 m²/g, 150 m²/g, 160 m²/g, 170 m²/g, 180 m²/g, 190 m²/g, 200 m²/g, 210 m²/g, 220 m²/g, 230 m²/g, 240 m²/g, 250 m²/g, 260 m²/g, 270 m²/g, 280 m²/g, 290 m²/g, 300 m²/g, 310 m²/g, 320 m²/g, 330 m²/g, 340 m²/g, 350 m²/g, 360 m²/g, 370 m²/g, 380 m²/g, 390 m²/g, 400 m²/g, 410 m²/g, 420 m²/g, 430 m²/g, 440 m²/g, 450 m²/g, 500 m²/g, 550 m²/g, 600 m²/g, 650 m²/g, 700 m²/g, 750 m²/g, 800 m²/g, 850 m²/g, 900 m²/g, 950 m²/g, 1000 m²/g, 1050 m²/g, 1100 m²/g, 1150 m²/g, 1200 m²/g, 1250 m²/g, 1300 m²/g, 1350 m²/g, 1400 m²/g, 1450 m²/g, 1500 m²/g, 1550 m²/g, 1600 m²/g, 1650 m²/g, 1700 m²/g, 1750 m²/g, 1800 m²/g, 1850 m²/g, 1900 m²/g, 1950 m²/g, 2000 m²/g, 2050 m²/g, 2100 m²/g, 2150 m²/g, 2200 m²/g, 2250 m²/g, 2300 m²/g, 2350 m²/g, 2400 m²/g, 2450 m²/g, or in a range formed by any two of these values, for example, the specific surface area of the sodiophilic carbon-based materials may be in a range of from 90 m²/g to 2450 m²/g, from 100 m²/g to 2300 m²/g, from 180m²/g to 2200 m²/g, from 240 m²/g to 1800 m²/g, from 350 m²/g to 1500 m²/g, or from 600m²/g to 1200 m²/g.

In some embodiments of the present application, sodiophilic carbon-based materials include one or more of graphene oxide and its modified form, modified carbon nanotubes, and modified carbon fibers. The aforementioned sodiophilic carbon-based materials can form a good porous conductive network, so as to improve the conductivity of the positive electrode active material and facilitate the deintercalation of sodium ions, leading to enhanced cycle performance and safety performance of the sodium-ion battery.

In some embodiments of the present application, the modified carbon nanotubes include one or more of modified single-walled carbon nanotubes and modified multi-walled carbon nanotubes. Both the modified single-walled carbon nanotubes and the modified multi-walled carbon nanotubes not only possess excellent sodiophilic characteristics, but also can form a stable porous conductive network, which ensures good conductivity for the positive electrode active material and reduces the lateral growth of sodium dendrites, leading to enhanced safety performance and cycle performance of the sodium-ion battery.

In some embodiments of the present application, the average length of the modified single-walled carbon nanotubes is in a range of 3 µm to 28 µm. The modified single-walled carbon nanotubes, when set within the aforementioned range, can form a stable porous conductive network, which improves the conductivity of the positive electrode active material while further enhancing the sodiophilic characteristics of the shell for better wrapping the core to reduce the expansion rate thereof, leading to further enhanced safety performance and cycle performance of the sodium-ion battery.

In some examples, the average length of the modified single-walled carbon nanotubes may be, but not limited to, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, or in a range formed by any two of the aforementioned values, for example, the average length of modified single-walled carbon nanotubes may be in a range of from 4 µm to 27 µm, from 5 µm to 25 µm, from 8 µm to 22 µm, or from 11 µm to 18 µm.

In some embodiments of the present application, the average diameter of the modified single-walled carbon nanotubes is in a range of 1.5 nm to 9.5 nm. The average diameter of modified single-walled carbon nanotubes, when set within the aforementioned range, can contribute to a stable porous conductive network, and reduced manufacturing difficulty of carbon nanotubes and thus lowered manufacturing costs of the current collector.

In some examples, the average diameter of the modified single-walled carbon nanotubes may be, but not limited to, 1.5 nm, 2 nm, 2.5 nm, 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, or in a range formed by any two of the aforementioned values; for example, the average diameter of modified single-walled carbon nanotubes may be in a range of from 2 nm to 9 nm, from 2.5 nm to 8 nm, from 3 nm to 7.5 nm, or from 4 nm to 6.5 nm.

In some embodiments of the present application, the specific surface area of the modified single-walled carbon nanotubes is in a range of 210 m²/g to 1900 m²/g. For example, the specific surface area of the modified single-walled carbon nanotubes may be, but not limited to, 210 m²/g, 220 m²/g, 230 m²/g, 240 m²/g, 250 m²/g, 260 m²/g, 270 m²/g, 280 m²/g, 290 m²/g, 300 m²/g, 310 m²/g, 320 m²/g, 330 m²/g, 340 m²/g, 350 m²/g, 360 m²/g, 370 m²/g, 380 m²/g, 390 m²/g, 400 m²/g, 410 m²/g, 420 m²/g, 430 m²/g, 440 m²/g, 450 m²/g, 500 m²/g, 550 m²/g, 600 m²/g, 650 m²/g, 700 m²/g, 750 m²/g, 800 m²/g, 850 m²/g, 900 m²/g, 950 m²/g, 1000 m²/g, 1050 m²/g, 1100 m²/g, 1150 m²/g, 1200 m²/g, 1250 m²/g, 1300 m²/g, 1350 m²/g, 1400 m²/g, 1450 m²/g, 1500 m²/g, 1550 m²/g, 1600 m²/g, 1650 m²/g, 1700 m²/g, 1750 m²/g, 1800 m²/g, 1850 m²/g, 1900 m²/g, or in a range formed by any two of these values, for example, the specific surface area of modified single-walled carbon nanotubes may be in a range of from 220 m²/g to 1850 m²/g, from 300 m²/g to 1500 m²/g, from 550 m²/g to 1200 m²/g, or from 750 m²/g to 1000 m²/g.

In some embodiments of the present application, the average length of the modified multi-walled carbon nanotubes is in a range of 1 µm to 18 µm. For example, the average length of the modified multi-walled carbon nanotubes may include, but not limited to, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, or in a range formed by any two of these values, for example, the average length of modified multi-walled carbon nanotubes may be in a range of from 2 µm to 17 µm, from 3 µm to 16 µm, from 5 µm to 14 µm, or from 8 µm to 12 µm.

In some embodiments of the present application, the average diameter of the modified multi-walled carbon nanotubes is in a range of 7 nm to 90 nm. For example, the average diameter of the modified multi-walled carbon nanotubes may be, but not limited to, 7 nm, 8 nm, 9 nm, 10 nm, 11 nm, 12 nm, 13 nm, 14 nm, 15 nm, 16 nm, 17 nm, 18 nm, 19 nm, 20 nm, 21 nm, 22 nm, 23 nm, 24 nm, 25 nm, 26 nm, 27 nm, 28 nm, 29 nm, 30 nm, 31 nm, 32 nm, 33 nm, 34 nm, 35 nm, 36 nm, 37 nm, 38 nm, 39 nm, 40 nm, 41 nm, 42 nm, 43 nm, 44 nm, 45 nm, 46 nm, 47 nm, 48 nm, 49 nm, 50 nm, 51 nm, 52 nm, 53 nm, 54 nm, 55 nm, 56 nm, 57 nm, 58 nm, 59 nm, 60 nm, 65 nm, 70 nm, 75 nm, 80 nm, 85 nm, 90 nm, or in a range formed by any two of these values, for example, the average diameter of the modified multi-walled carbon nanotubes may be in a range of from 8 nm to 85 nm, from 11 nm to 80 nm, from 15 nm to 70 nm, from 20 nm to 65 nm, from 25 nm to 55 nm, or from 30 nm to 50 nm.

In some embodiments of the present application, the specific surface area of the modified multi-walled carbon nanotubes is in a range of 260 m²/g to 2900 m²/g. For example, the specific surface area of the modified multi-walled carbon nanotubes may be, but not limited to, 260 m²/g, 270 m²/g, 280 m²/g, 290 m²/g, 300 m²/g, 310 m²/g, 320 m²/g, 330 m²/g, 340 m²/g, 350 m²/g, 360 m²/g, 370 m²/g, 380 m²/g, 390 m²/g, 400 m²/g, 410 m²/g, 420 m²/g, 430 m²/g, 440 m²/g, 450 m²/g, 500 m²/g, 550 m²/g, 600 m²/g, 650 m²/g, 700 m²/g, 750 m²/g, 800 m²/g, 850 m²/g, 900 m²/g, 950 m²/g, 1000 m²/g, 1050 m²/g, 1100 m²/g, 1150 m²/g, 1200 m²/g, 1250 m²/g, 1300 m²/g, 1350 m²/g, 1400 m²/g, 1450 m²/g, 1500 m²/g, 1550 m²/g, 1600 m²/g, 1650 m²/g, 1700 m²/g, 1750 m²/g, 1800 m²/g, 1850 m²/g, 1900 m²/g, 1950 m²/g, 2000 m²/g, 2050 m²/g, 2100 m²/g, 2150 m²/g, 2200 m²/g, 2250 m²/g, 2300 m²/g, 2350 m²/g, 2400 m²/g, 2450 m²/g, 2500 m²/g, 2550 m²/g, 2600 m²/g, 2650 m²/g, 2700 m²/g, 2750 m²/g, 2800 m²/g, 2850 m²/g, 2900 m²/g, or in a range formed by any two of these values, for example, the specific surface area of modified multi-walled carbon nanotubes may be in a range of from 270 m²/g to 2850 m²/g, from 300 m²/g to 2400 m²/g, from 440 m²/g to 2000 m²/g, from 550 m²/g to 1700 m²/g, or from 750 m²/g to 1550 m²/g.

In the present application, the average length of the material can be measured using methods known in the art. For example, the average length of the material can be measured by the following steps. A solution prepared by adding the material and carboxymethyl cellulose (CMC) in a weight ratio of 40:60 into water is diluted 1000 times in water to obtain a diluted solution, 20 mL of which is then filtered through a filter, and afterwards the filter is dried together with the filtered-out material retained thereon. After capturing 100 or more scanning electron microscope (SEM) images of the dried filter, the length of the material is measured using the ImageJ software from the images each, with an average of the measured length values taken as the average length of the material.

In the present application, the average diameter of the material can be measured using methods known in the art. For example, the average diameter of the material can be measured by the following steps. A solution prepared by adding the material and carboxymethyl cellulose (CMC) in a weight ratio of 40:60 into water is diluted 1000 times to obtain a diluted solution. One droplet of the diluted solution is placed on a mesh for transmission electron microscope (TEM), which is dried then. After drying, the TEM mesh is observed using a TEM device (H-7650 manufactured by Hitachi High-Tech Corporation), to measure the average diameter of the material.

In the present application, modifications such as functionalization (with hydroxyl, amino, carboxyl, carbonyl, thiol, or fluorination) or doping may be appropriately carried out to carbon materials to form sodiophilic carbon-based materials. Such modifications can be carried out using methods known in the art, such as fluorination or doping. Such modifications can be carried out using methods known in the art, which involve reacting carbon nanotubes with strong oxidizing acids or chemical substances with relevant functional groups, for example, heating carbon nanotubes with nitric acid at different concentrations for a certain period to obtain hydroxylated or carboxylated carbon nanotubes.

In some embodiments of the present application, the modified single-walled carbon nanotubes include one or more of functionalized single-walled carbon nanotubes or doped single-walled carbon nanotubes. Through the aforementioned modification methods, the resulting single-walled carbon nanotubes exhibit good sodiophilic properties, which further enables the shell to better wrap the core to reduce the expansion of the core. As a result, the deintercalation of sodium ions within the positive electrode active material is facilitated, leading to further enhanced cycle performance and safety performance of the sodium-ion battery.

In some embodiments of the present application, the functionalized single-walled carbon nanotubes include one or more of hydroxyl-functionalized single-walled carbon nanotubes and carboxyl-functionalized single-walled carbon nanotubes. Due to favorable sodiophilic characteristics of hydroxyl and carboxyl, the single-walled carbon nanotubes functionalized therewith exhibit improved sodiophilic characteristics.

In some embodiments of the present application, the doped single-walled carbon nanotubes include one or more of phosphorus-doped, sulfur-doped, nitrogen-doped, oxygen-doped, and boron-doped single-walled carbon nanotubes. Due to favorable sodiophilic characteristics of the aforementioned elements, the single-walled carbon nanotubes doped therewith exhibit improved sodiophilic characteristics.

It should be noted that the aforementioned groups for functionalization and elements to be doped may also be used to modify graphene oxide, multi-walled carbon nanotubes, and carbon fibers.

In some embodiments of the present application, sodiophilic metal-based particles include one or more of sodiophilic metal particles and sodiophilic metal oxide particles.

In some embodiments of the present application, the average particle size of the sodiophilic metal particles is in a range of 0.1 µm to 5 µm.

In some embodiments of the present application, the average particle size of the sodiophilic metal oxide particles is in a range of 0.1 µm to 5 µm.

In the aforementioned embodiments, the average particle size of the sodiophilic metal particles and the average particle size of the sodiophilic metal oxide particles, when set within the aforementioned range, can improve the sodiophilic characteristics of the material while also contributing to reduced thickness of the positive electrode, thereby increasing the energy density of the sodium-ion battery.

In some embodiments of the present application, the sodiophilic metal particles include one or more of copper, tin, gold, silver, aluminum, indium, zinc, lead, antimony, or alloys thereof.

In some embodiments of the present application, the sodiophilic metal oxide particles include one or more of copper oxide, tin oxide, β-aluminum oxide, manganese dioxide, tricobalt tetroxide, zinc oxide, or nickel oxide.

In some embodiments of the present application, the thickness of the shell layer is in a range of 0.1 µm to 1 µm. The shell layer with the thickness set within the aforementioned range can stably coat the core to further reduce the expansion of the core, which is conducive to the deintercalation of sodium ions from the core, thereby enhancing the cycle performance of the sodium-ion battery.

In some examples, the thickness of the shell layer may be, but not limited to, 0.1 µm, 0.11 µm, 0.12 µm, 0.13 µm, 0.14 µm, 0.15 µm, 0.16 µm, 0.17 µm, 0.18 µm, 0.19 µm, 0.2 µm, 0.21 µm, 0.22 µm, 0.23 µm, 0.24 µm, 0.25 µm, 0.26 µm, 0.27 µm, 0.28 µm, 0.29 µm, 0.3 µm, 0.31 µm, 0.32 µm, 0.33 µm, 0.34 µm, 0.35 µm, 0.36 µm, 0.37 µm, 0.38 µm, 0.39 µm, 0.4 µm, 0.41 µm, 0.42 µm, 0.43 µm, 0.44 µm, 0.45 µm, 0.46 µm, 0.47 µm, 0.48 µm, 0.49 µm, 0.5 µm, 0.51 µm, 0.52 µm, 0.53 µm, 0.54 µm, 0.55 µm, 0.56 µm, 0.57 µm, 0.58 µm, 0.59 µm, 0.6 µm, 0.61 µm, 0.62 µm, 0.63 µm, 0.64 µm, 0.65 µm, 0.66 µm, 0.67 µm, 0.68 µm, 0.69 µm, 0.7 µm, 0.71 µm, 0.72 µm, 0.73 µm, 0.74 µm, 0.75 µm, 0.76 µm, 0.77 µm, 0.78 µm, 0.79 µm, 0.8 µm, 0.81 µm, 0.82 µm, 0.83 µm, 0.84 µm, 0.85 µm, 0.86 µm, 0.87 µm, 0.88 µm, 0.89 µm, 0.9 µm, 0.91 µm, 0.92 µm, 0.93 µm, 0.94 µm, 0.95 µm, 0.96 µm, 0.97 µm, 0.98 µm, 0.99 µm, 1 µm, or in a range formed by any two of the above values; for example, the thickness of the shell layer may be in a range of from 0.11 µm to 0.99 µm, from 0.15 µm to 0.91 µm, from 0.2 µm to 0.85 µm, from 0.28 µm to 0.72 µm, or from 0.36 µm to 0.61 µm.

In the present application, the thickness of the shell layer has a well-known meaning in the art and can be tested using methods known in the art, for example, the thickness may be tested based on cross-sectional images by using the transmission electron microscope (TEM).

In some embodiments of the present application, the sodium-containing positive electrode active material particles may include one or more of sodium transition metal oxides, polyanionicic compounds, and Prussian blue-type compounds. In other embodiments of the present application, other known materials that are suitable as positive electrode active materials for a sodium-ion battery may be used, such as NaFePO₄F and NaFePO₄.

In some examples, the sodium transition metal oxides may include one or more of Mn, Fe, Ni, Co, Cr, Cu, Ti, Zn, V, Zr, and Ce. For instance, if sodium transition metal oxides are represented as NaₓMO₂, M may be one or more of Ti, V, Mn, Co, Ni, Fe, Cr, and Cu; and 0 < x ≤ 1.

In other examples, polyanionicic compounds may be a class of compounds that contain sodium ions, transition metal ions, and tetrahedral (YO₄)ⁿ⁻ anionic units, where the transition metal may include one or more of Mn, Fe, Ni, Co, Cr, Cu, Ti, Zn, V, Zr, and Ce; Y may include one or more of P, S, and Si; and n denotes the valence state of (YO₄)ⁿ⁻.

The polyanionic compounds may also be a class of compounds that contain sodium ions, transition metal ions, tetrahedral (YO₄)ⁿ⁻ anionic units, and halogen anions, where the transition metal may include one or more of Mn, Fe, Ni, Co, Cr, Cu, Ti, Zn, V, Zr, and Ce; Y may include one or more of P, S, and Si; n denotes the valence state of (YO₄)ⁿ⁻; and halogen may include one or more of F, Cl, and Br.

In some specific embodiments, polyanionic compounds may include one or more of NaFePO₄, Na₃V₂(PO₄)₃, NaM' PO₄F (where M' includes one or more of V, Fe, Mn, and Ni), and Na₃(VO_{y})₂(PO₄)₂F_{3-2y} (0 ≤ y ≤ 1).

In some examples, Prussian blue-type compounds may be a class of compounds that contain sodium ions, transition metal ions, and cyanide ions (CN). The transition metal may be at least one of Mn, Fe, Ni, Co, Cr, Cu, Ti, Zn, V, Zr, and Ce. Prussian blue-type compounds, for example, may be represented by NaₐMe_{b}Me'_{c}(CN)₆, where Me and Me' each independently include one or more of Ni, Cu, Fe, Mn, Co, and Zn, 0 < a ≤ 2, 0 < b < 1, and 0 < c < 1.

In the present application, the positive electrode active material can be prepared using methods known in the art; for example, the positive electrode active material can be prepared by the following steps. A material of the core and a material of the shell are mixed and ground, with a pore-forming agent then added to obtain mixed raw material. The resulting mixed raw material is sintered to prepare the positive electrode active material that includes a core and a shell layer covering the surface of the core. The core includes one or more sodium-containing positive electrode active material particles, and the shell layer has a pore structure and contains a sodiophilic material.

In the aforementioned method for preparing the positive electrode active material, the pore structure of the shell layer is formed using a pore-forming agent. In some embodiments of the present application, the pore-forming agent may include one or more of a pyrolytic pore-forming agents and porous medium materials. For example, the pyrolytic pore-forming agents may include one or more of ammonium carbonate and ammonium bicarbonate. The aforementioned pyrolytic pore-forming agent decomposes from solid into gas at a specific temperature, forming a pore structure in situ in the active material layer. In addition, the type of the pore-forming agent may also be selected based on the pre-prepared pore diameter and sintering temperature.

### Sodium-ion battery

A second aspect of the present application provides a sodium-ion battery, which comprises the positive electrode active material for a sodium-ion battery according to the first aspect of the present application.

As will be appreciated, a sodium-ion battery typically includes an electrode assembly that consists of a positive electrode plate, a negative electrode plate and a separator, and an electrolytic solution. The sodium-ion battery operates primarily by the movement of metal ions across the separator between the positive electrode plate and the negative electrode plate, wherein the positive electrode plate includes a positive electrode current collector and, on one side of the positive electrode current collector, a positive electrode active material layer that contains the positive electrode active material according to the first aspect of the present application.

In some embodiments of the present application, the positive electrode current collector may be made of materials such as a metal foil or a porous metal plate. For example, the material of the positive electrode current collector may be, but not limited to, a foil or a porous plate of a metal such as copper, nickel, titanium, silver, or an alloy thereof. Furthermore, in some specific embodiments of the present application, the positive electrode current collector is made of aluminum foil.

In some embodiments of the present application, the positive electrode active material layer may further include a conductive agent and a binder. The types of the conductive agent and the binder used in the positive electrode active material layer are not particularly limited in the embodiments of the present application, and can be selected according to actual needs.

For example, the conductive agent may be, but not limited to, one or more of graphite, superconducting carbon, acetylene black, carbon black, Ketjen black, carbon dots, carbon nanotubes, graphene, and carbon nanofibers. The binder may be, but not limited to, one or more of styrenebutadiene rubber (SBR), water-based acrylic resin, carboxymethyl cellulose (CMC), polyvinylidene fluoride (PVDF), polytetrafluoroethylene (PTFE), polyvinyl butyral (PVB), ethylene-vinyl acetate copolymer (EVA), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorine-containing acrylic resin, and polyvinyl alcohol (PVA).

In the embodiments of the present application, the preparation of a positive electrode plate involves mixing the positive electrode active material, the conductive agent, and the binder in a certain mass ratio in an appropriate amount of N-methylpyrrolidone (NMP) with thorough stirring to form a uniform positive electrode slurry; and then applying the resulting positive electrode slurry to the surface of an aluminum foil which serves as the positive electrode current collector, followed by drying, cold pressing, and die cutting.

In some embodiments of the present application, the negative electrode plate includes a negative electrode current collector and a sodiophilic layer on one side of the negative electrode current collector. The sodiophilic layer includes a hollow-structured sodiophilic shell that contains a sodiophilic material. Such a structure can reduce lateral growth of sodium dendrites, while also enabling uniform deposition of sodium on the surface of the negative electrode current collector, which leads to further enhanced cycle performance and safety performance of the sodium-ion battery.

In the above-mentioned embodiments, the sodiophilic material includes the materials of the shell layer in the positive electrode active material as described above, such as sodiophilic metal particles, sodiophilic metal oxide particles, and sodiophilic carbon-based materials.

In some embodiments of the present application, the sodiophilic layer further includes a negative electrode active material, but the type of negative electrode active material is not specifically limited, which can be selected according to actual needs by those skilled in the art. For example, the negative electrode active material may include one or more of carbon materials, alloy materials, 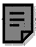 sition metal oxides, transition metal sulfides, phosphorus-based materials, and titanate materials. In some specific embodiments, the negative electrode active material includes a carbon material.

In some examples, the carbon material may include one or more of natural graphite, artificial graphite, mesocarbon microbeads (MCMB), hard carbon and soft carbon. The alloy material may include one or more alloy materials composed of various compositions among Si, Ge, Sn, Pb, and Sb. For example, the transition metal oxide is represented by the following chemical formula: M¹ᵤOᵥ, where M¹ may be selected from one or more of Fe, Co, Ni, Cu, Mn, Sn, Mo, Sb, and V; and au = 2v, where a denotes the valence state of M¹. For example, the transition metal sulfide is represented by the following chemical formula: M²ᵢSⱼ, where M² may include one or more of Fe, Co, Ni, Cu, Mn, Sn, Mo, Sb, and V, and bi = 2j, where b denotes the valence state of M². The phosphorus-based material may include one or more of red phosphorus, white phosphorus, and black phosphorus. The titanate material may include one or more of Na₂Ti₃O₇, Na₂Ti₆O₁₃, Na₄Ti₅O₁₂, Li₄Ti₅O₁₂, and NaTi₂(PO₄)₃.

In some embodiments of the present application, the negative electrode active material layer may further include a conductive agent and a binder. In the embodiments of the present application, the types of the conductive agent and the binder in the negative electrode active material layer are not specifically limited, and can be selected according to actual needs.

For example, the conductive agent may be, but not limited to, one or more of graphite, superconducting carbon, acetylene black, carbon black, Ketjen black, carbon dots, carbon nanotubes, graphene, and carbon nanofibers. The binder may be, but not limited to, one or more of styrenebutadiene rubber (SBR), polyvinylidene fluoride (PVDF), polytetrafluoroethylene (PTFE), polyvinyl butyral (PVB), water-based acrylic resin, and carboxymethyl cellulose (CMC).

In the embodiments of the present application, the preparation of the negative electrode plate involves mixing the carbonate, the sodiophilic material, the binder, and the pore-forming agent in a certain mass ratio with thorough stirring in an appropriate amount of deionized water to form a uniform negative electrode slurry; and then applying the resulting negative electrode slurry to the surface of the negative electrode current collector, followed by baking, drying, and cold pressing.

Furthermore, the sodium-ion battery according to the present application includes an electrolytic solution that contains an organic solvent and an electrolyte sodium salt. The types of the electrolyte sodium salts and the organic solvent are not specifically limited and can be selected according to actual needs. The electrolytic solution may contain an organic solvent and an electrolyte sodium salt.

In some embodiments of the present application, the organic solvent includes an ether-based organic solvent, which includes, for example, one or more of diethylene glycol dimethyl ether, triethylene glycol dimethyl ether, or tetraethylene glycol dimethyl ether, and tetrahydrofuran.

In some embodiments of the present application, the molar concentration of the electrolyte sodium salt is in a range of 0.5 mol/L to 3 mol/L, and the electrolyte sodium salt may include one or more of sodium hexafluorophosphate, sodium fluoroborate, sodium bis(trifluoromethanesulfonyl)imide, sodium bis(fluorosulfonyl)imide, and sodium bis(oxalato)borate.

In some embodiments of the present application, the electrolytic solution may optionally include additives. For example, these additives may include negative electrode film-forming additives, positive electrode film-forming additives, or additives that is capable of enhancing certain performance of the sodium-ion battery, such as additives to enhance overcharge performance, high-temperature performance, or low-temperature power performance of the sodium-ion battery.

In the embodiments of the present application, the material of the separator is not particularly limited and can be any well-known material for the separator with excellent chemical and mechanical stability. For example, the separator may include one or more of a porous polyolefin-based resin film (such as polyethylene, polypropylene, polyvinylidene fluoride, or any combination thereof), porous glass fiber, or porous non-woven fabric. The porous separator may be a single-layer film or a multi-layer composite film. When the separator is a multi-layer composite film, the materials of the respective layers may be the same or different.

In some embodiments of the present application, the sodium-ion battery may be further provided with outer package. This outer package may be used to package the above-mentioned electrode assembly and electrolytic solution.

In some embodiments of the present application, the outer package of the sodium-ion battery may be a hard case, such as a hard plastic case, aluminum case, or steel case. The outer package of the sodium-ion battery may also be a soft case, such as a soft pouch. The material of the soft pouch may be plastic, such as at least one of polypropylene (PP), polybutylene terephthalate (PBT), and polybutylene succinate (PBS).

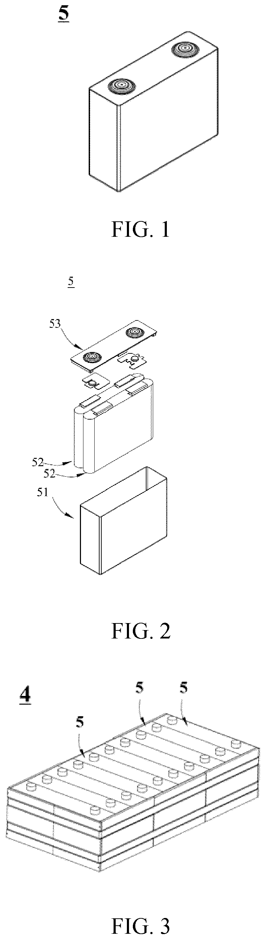

The shape of the sodium-ion battery is not particularly limited in the present application, which may be cylindrical, square, or any other shape. Fig. 1 illustrates an exemplary square-shaped sodium-ion battery 5.

In some embodiments of the present application, as shown in Fig. 2, the outer package may include a housing 51 and a cover plate 53. The housing 51 may include a bottom plate and side plates connected to the bottom plate, which corporately enclose a receiving cavity. The housing 51 has an opening that communicates with the receiving cavity, and the cover plate 53 is used to cover the opening to seal the receiving cavity. The positive electrode plate, the negative electrode plate, and the separator can form the electrode assembly 52 through a winding process and/or stacking process. The electrode assembly 52 is packaged in the receiving cavity. The electrolytic solution permeates the electrode assembly 52. The number of electrode assemblies 52 in the sodium-ion battery 5 may be one or more, which may vary depending on the requirements.

The method for manufacturing the sodium-ion battery in the present application is well known. In some embodiments of the present application, the positive electrode plate, the separator, the negative electrode plate, and the electrolytic solution may be assembled to form a sodium-ion battery. For example, the positive electrode plate, the separator, and the negative electrode plate may be wound or stacked to form an electrode assembly. Then the resulting electrode assembly is placed in the outer package, dried, and injected with the electrolytic solution, after which the processes such as vacuum sealing, standing, formation, and shaping are carried out to prepare the sodium-ion battery.

In some embodiments of the present application, the sodium-ion battery according to the present application can be assembled into a battery module. The number of sodium-ion batteries in the battery module may be plural and may vary depending on the application and required capacity of the battery module.

Fig. 3 is a schematic structural diagram of an exemplary battery module structure. As shown in Fig. 3, in the battery module 4, a plurality of sodium-ion batteries 5 can be arranged sequentially along the lengthwise direction of the battery module 4. Of course, the plurality of sodium-ion batteries 5 may also be arranged in any other manner. Additionally, the plurality of sodium-ion batteries 5 may be further secured using fasteners.

Optionally, the battery module 4 may further include a housing with a receiving space, with the plurality of sodium-ion batteries 5 received therein.

In some embodiments of the present application, the aforementioned battery module may further be assembled into a battery pack. The number of battery modules in the battery pack may vary depending on the application and required capacity of the battery pack.

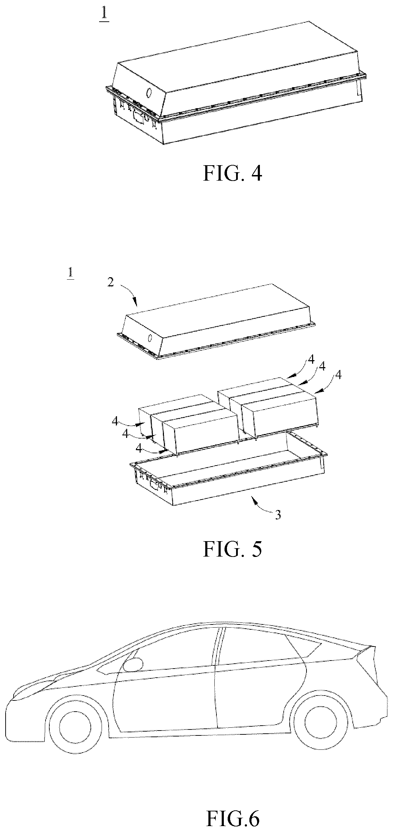

Figs. 4 and 5 are schematic structural diagrams of an exemplary battery pack. As shown in Figs. 4 and 5, the battery pack 1 may include a battery case and a plurality of battery modules 4 disposed in the battery case. The battery case consists of an upper case body 2 configured to cover a lower case body 3 to form a sealed space for receiving the battery modules 4, and the lower case box 3. The plurality of battery modules 4 may be arranged in the battery case in any manner.

### Electrical Device

A third aspect of the present application provides an electrical device, which includes one or more of the sodium-ion battery, the battery module, or the battery pack according to the second aspect of the present application. The sodium-ion battery, the battery module, or the battery pack can serve as the power source or energy storage unit for the electrical device.

The electrical device in the present application may be, but not limited to, a mobile phone, a tablet computer, a notebook computer, electric toys, a power tool, an electric bicycle, an electric vehicle, a ship, spacecraft, an energy storage, etc. The electric toy may include a fixed or mobile electric toy, such as a game console, an electric toy car, an electric toy ship, and an electric toy airplane, etc., and the spacecraft may include an airplane, a rocket, a space shuttle, a spacecraft, etc.

Additionally, the electrical device may be mounted with a sodium-ion battery, a battery module, or a battery pack according to its specific usage needs.

Fig. 6 illustrates a specific structural diagram of an as exemplary electrical device. The electrical device is a pure electric vehicle, a hybrid electric vehicle, or a plug-in hybrid electric vehicle, etc. The electrical device may be mounted with a battery pack or battery module so as to meet requirements for both high power and high energy density.

The following examples more specifically describe the content disclosed in the present application, and these examples are only used for explanatory description, because various modifications and changes within the scope of the present disclosure are apparent to those skilled in the art. All reagents used in the examples are commercially available or synthesized according to conventional methods and can be directly used without further treatment, and all instruments used in the examples are commercially available.

### Example 1

### Preparation of positive electrode plate

The positive electrode active material was prepared by the following steps. Sodium iron phosphate as the positive electrode active material particles, and hydroxyl-functionalized multi-walled carbon nanotubes were added to an agate mortar in a mass ratio of 18:1 for thorough grinding, and was added with ammonium carbonate as the pore-forming agent at a mass fraction of 1% (that is, the percentage by mass of the pore-forming agent relative to the total mass of the positive electrode active material particles, the sodiophilic material, and the pore-forming agent) to obtain a mixed raw material. Then the resulting mixed raw material was placed in a muffle furnace (KSL-1100X-S) and calcined at 800°C for 12 hours to obtain the positive electrode active material.

The positive electrode active material prepared as described above was mixed with acetylene black as the conductive agent, and the carboxymethyl cellulose as the binder at a mass ratio of 95:2:3 in an appropriate amount of N-methylpyrrolidone (NMP) with thorough stirring to form a uniform positive electrode slurry. The resulting positive electrode slurry was then applied to the surface of the aluminum foil, which serves as the positive electrode current collector, followed by drying, cold pressing and die cutting to prepare the positive electrode plate.

### Preparation of negative electrode plate

Sodium carbonate, acetylene black, and carboxymethyl cellulose as the binder were mixed at a mass ratio of 95:2:3 in an appropriate amount of N-methylpyrrolidone (NMP) with thorough stirring, and then was added with 1% of ammonium carbonate as the pore-forming agent to form a homogenous negative electrode slurry. The resulting negative electrode slurry was applied to the surface of the aluminum foil as the negative electrode current collector, and then baked at 120°C, dried, and cold pressed to prepare the negative electrode plate.

### Separator

### A polyethylene film was used as the separator.

### Electrolytic solution

In a glovebox that was filled with argon gas and had a moisture content of less than 1 ppm, diethylene glycol dimethyl ether and tetrahydrofuran were mixed in a mass ratio of 1:3, and then added with sodium hexafluorophosphate (NaPF₆) with a concentration of 1.0 mol/L for thorough stirring to prepare the electrolytic solution.

### Preparation of sodium-ion battery

The positive electrode plate, the separator, and the negative electrode plate were wound or stacked to form an electrode assembly. The electrode assembly was then placed in an outer package, dried, and injected with the electrolytic solution, after which the processes such as vacuum sealing, standing, formation, and shaping were carried out to prepare the sodium-ion battery.

### Examples 2-21

The preparation methods were similar to that of Example 1, except for the differences in related parameters of the shell layer, such as the material of the shell layer and the average pore diameter of the pores.

### Comparative Examples 1-2

The preparation methods were similar to that of Example 1, except for the differences in that no shell layer was applied on the positive electrode active material particles, or the shell layer did not have a pore structure.

### Test Section

### (1) Capacity retention rate test

At 25°C, the battery was charged to the upper cut-off voltage of 3.65V to 4.25V at a rate of 1/3C and then discharged to the lower cut-off voltage of 1.5V to 2.5V at a rate of 1/3C; such charge/discharge process was repeated three times, and the discharge capacity in the third discharge was taken as the standard capacity C1. Then, the battery was charged at 1C and then discharged at 1C. The charge/discharge process was repeated for 200 cycles, and the discharge capacity C200 was measured. Then the capacity retention rate = C200/C1.

### (2) Test of sodium dendrites on surface of negative electrode plate

After 100 cycles of charge and discharge at 1C, the sodium-ion battery in a fully charged state was disassembled. The surface morphology of the metallic sodium negative electrode was observed using an optical microscopy, while the cross-sectional morphology of the metallic sodium was observed using an electron microscopy to observe the deposition thickness for comparison with the theoretical deposition thickness. A thickness growth rate below 140% was considered to indicate no sodium dendrite formation. A thickness growth rate of from 150% to 200% indicates formation of dendrites at a slight level. A thickness growth rate of from 200% to 230% indicates formation of dendrites at a moderate level. A thickness growth rate of from 230% to 300% indicates formation of dendrites at a severe level.

Table 1 lists the test results of Examples 1-21 and Comparative Example 1-2, which contain different positive electrode active materials.

**Table 1**

| No. | Core | | Shell layer | | Capacity retention rate | Sodium dendrites |
|---|---|---|---|---|---|---|
| | Material | Average particle size D1 | Sodiophilic material | Average pore diameter D2 | | |
| Example 1 | NaFePO₄ | 20 µm | Hydroxyl-functionalized multi-walled carbon nanotube | 0.05 µm | 96% | <140% |
| Example 2 | NaFePO₄ | 20 µm | Hydroxyl-functionalized multi-walled carbon nanotube | 0.1µm | 98% | <140% |
| Example 3 | NaFePO₄ | 20 µm | Hydroxyl-functionalized multi-walled carbon nanotube | 0.3 µm | 98% | <140% |
| Example 4 | NaFePO₄ | 20 µm | Hydroxyl-functionalized multi-walled carbon nanotube | 0.6 µm | 96% | <140% |
| Example 5 | NaFePO₄ | 20 µm | Carboxyl-functionalized multi-walled carbon nanotube | 1 µm | 96% | <140% |
| Example 6 | NaFePO₄ | 10 µm | Hydroxyl-functionalized multi-walled carbon nanotube | 0.3 µm | 98% | <140% |
| Example 7 | NaFePO₄ | 20 µm | Hydroxyl-functionalized multi-walled carbon nanotube | 0.3 µm | 98% | <140% |
| Example 8 | NaFePO₄ | 30 µm | Hydroxyl-functionalized multi-walled carbon nanotube | 0.3 µm | 98% | <140% |
| Example 9 | NaFePO₄ | 40 µm | Hydroxyl-functionalized multi-walled carbon nanotube | 0.3 µm | 98% | <140% |
| Example 10 | NaFePO₄ | 50 µm | Carboxyl-functionalized multi-walled carbon nanotube | 0.3 µm | 98% | <140% |
| Example 11 | NaFePO₄ | 20 µm | Hydroxyl-functionalized multi-walled carbon nanotube | 0.3 µm | 98% | <140% |
| Example 12 | NaFePO₄F | 20 µm | Hydroxyl-functionalized multi-walled carbon nanotube | 0.3 µm | 96% | <140% |
| Example 13 | NaFePO₄ | 20 µm | Phosphorus-doped multi-walled carbon nanotube | 0.3 µm | 96% | <140% |
| Example 14 | NaFePO₄ | 20 µm | Sulfur-doped multi-walled carbon nanotube | 0.3 µm | 96% | <140% |
| Example 15 | NaFePO₄ | 20 µm | Nitrogen-doped multi-walled nanotube | 0.3 µm | 96% | <140% |
| Example 16 | NaFePO₄ | 20 µm | Hydroxyl-functionalized single-walled carbon nanotube | 0.3 µm | 96% | <140% |
| Example 17 | NaFePO₄ | 20 µm | Graphene oxide | 0.3 µm | 96% | <140% |
| Example 18 | NaFePO₄ | 20 µm | Aluminum particles | 0.3 µm | 96% | <140% |
| Example 19 | NaFePO₄ | 20 µm | Tin particles | 0.3 µm | 96% | <140% |
| Example 20 | NaFePO₄ | 20 µm | β-aluminum oxide | 0.3 µm | 96% | <140% |
| Example 21 | NaFePO₄ | 20 µm | Nickel oxide | 0.3 µm | 96% | <140% |
| Comparative Example 1 | NaFePO₄ | 20 µm | Hydroxyl-functionalized multi-walled carbon nanotube | 0 nm | 90% | 150%-200% |
| Comparative Example 2 | NaFePO₄ | 20 µm | / | / | 85% | 230%-300% |

Based on Table 1, the comparison of the test results of Examples 1-21 with Comparative Examples 1-2 shows that, the shell layer containing the sodiophilic material can better wrap the core which comprises the sodium-containing positive electrode active material particles. When the positive electrode active material was used in a sodium-ion battery, the shell layer covering the surface of the core can reduce the expansion of the core and thus reduce the deformation of the positive electrode active material, which is conducive to the deintercalation of sodium ions, thereby achieving the purpose of enhancing the cycle performance and the safety performance of the sodium-ion battery.

Finally, it should be noted that the respective examples mentioned above are merely used to describe the technical solutions of the present application but not in a limiting manner. Although the present application has been described in detail in connection with the aforementioned examples, those skilled in the art should understand that modifications on the technical solutions described in these examples or replacement with equivalents for a part or all of the technical features are still allowed. Such modifications or replacements do not change the essence of the corresponding technical solutions, and therefore should all be included within the scope of the claims and the description of the present application. In particular, as long as there is no structural conflict, respective technical features in respective embodiments may be combined in any manner. The present application is not limited to the specific examples disclosed herein but includes all technical solutions falling within the scope of the claims.

## Claims

1. A positive electrode active material for a sodium-ion battery, comprising:
a core comprising a sodium-containing positive electrode active material particle; and
a shell layer covering a surface of the core, the shell layer having a pore structure and containing a sodiophilic material.

2. The positive electrode active material for a sodium-ion battery according to claim 1, wherein an average particle size D1 of the sodium-containing positive electrode active material particles and an average pore diameter D2 of the pore structure satisfy: 5 ≤ D1/D2 ≤ 600.

3. The positive electrode active material for a sodium-ion battery according to claim 1 or 2, wherein the average particle size D1 of the sodium-containing positive electrode active material is in a range of 10 µm to 50 µm, and/or
the average pore diameter D2 of the pore structure is in a range of 0.1 µm to 1 µm.

4. The positive electrode active material for a sodium-ion battery according to any one of claims 1 to 3, wherein the sodiophilic material includes one or more of sodiophilic carbon-based materials and sodiophilic metal-based particles;
optionally, the sodiophilic carbon-based materials include one or more of graphene oxide, modified graphene oxide, modified carbon nanotubes, and modified carbon fiber;
optionally, the sodiophilic metal-based particles include one or more of sodiophilic metal particles and sodiophilic metal oxide particles;
optionally, the sodiophilic metal particles include one or more of copper, tin, gold, silver, aluminum, indium, zinc, lead, antimony, or alloys thereof;
optionally, the sodiophilic metal oxide particles include one or more of copper oxide, tin oxide, β-alumina, manganese dioxide, tricobalt tetroxide, zinc oxide, and nickel oxide.

5. The positive electrode active material for a sodium-ion battery according to any one of claims 1 to 4, wherein the thickness of the shell layer is in a range of 0.1 µm to 1 µm.

6. A sodium-ion battery comprising the positive electrode active material for a sodium-ion battery according to any one of claims 1 to 5.

7. An electrical device comprising the sodium-ion battery according to claim 6.
